# EUROPÄISCHE PATENTANMELDUNG

(11) **EP 0 799 800 A1**
(43) Veröffentlichungstag der Anmeldung: **08.10.1997**
(21) Anmeldenummer: 97103072.1
(22) Anmeldetag: 26.02.1997
(51) Int. Cl.: C02F 1/72, B01J 23/889

(54) **Katalysator zur oxidation schwefelhaltiger Abwasserverunreinigungen**

(30) Priorität: 03.04.1996 DE 19613273
(71) Anmelder: Krupp VDM GmbH, 58791 Werdohl (DE)
(72) Erfinder: Herda, Wilfried, 40489 Düsseldorf (DE); Heubner, Ulrich, Dr., 58791 Werdohl (DE); Koppe, Jürgen, Dr., 06258 Schkopau (DE); Lausch, Hartmut, Dr., 06128 Halle (DE); Eichhorst, Volker, Dipl.-Ing., 06110 Halle (DE)
(74) Vertreter: Cohausz & Florack

(57) **Zusammenfassung**

Die Erfindung betrifft einen vollmetallischen Katalysator zur Oxidation von schwefelhaltigen Abwasserverunreinigungen in Gegenwart von Wasserstoffperoxid und Sauerstoff, der gekennzeichnet ist durch eine aus 10 bis 60 Masse-% Nickel, Rest Kupfer bestehende und bei Temperaturen von 500 bis 1200 °C für eine Zeit von 0,3 bis 3 Stunden in sauerstoffhaltiger Atmosphäre thermisch behandelte Legierung.

## Beschreibung

Die Erfindung betrifft einen vollmetallischen Katalysator zur Oxidation von schwefelhaltigen Abwasserverunreinigungen in Gegenwart von Wasserstoffperoxid und Sauerstoff.

Es ist bekannt, Abwasserverunreinigungen mittels vollmetallischer Katalysatoren zu reinigen (J. Koppe und U. Heubner: Chemie Umwelt Technik [1995/96] 34-37). Der dort beschriebene Vollmetallkatalysator MOLoxW enthält als Hauptkomponente Mangan. Aufgrund der Manganlöslichkeit im sauren Millieu ist der Einsatz dieses Katalysators auf die Reinigung neutraler und schwach alkalischer Abwässer beschränkt. Zum Abbau schwefelhaltiger Verbindungen ist er aber nicht geeignet.

Der Erfindung liegt die Aufgabe zugrunde, einen einfach herzustellenden, leicht zu entsorgenden leistungsfähigen Katalysator zur Oxidation schwefelhaltiger Abwasserverunreinigungen mittels Wasserstoffperoxid und Sauertoff zu entwickeln.

Diese Aufgabe wird erfindungsgemäß dadurch gelöst, daß eine Legierung aus 10 bis 60 Masse-% Nickel, Rest Kupfer bei Temperaturen von 500 bis 1200 °C für eine Zeit von 0,3 bis 3 Stunden in sauerstoffhaltiger Atmosphäre thermisch behandelt wird.

Dieser Legierung können als weitere Elemente Eisen, Mangan, Zink, Chrom, Phosphor, Schwefel einzeln oder zu mehreren bis insgesamt 5 Masse-% zu Lasten der Menge des Kupfers zugesetzt werden. Diese Elemente sind selber nicht in dem Maße katalytisch wirksam wie die Metalle Nickel und Kupfer, beeinträchtigen deren katalytische Wirksamkeit aber nicht.

Dieser Katalysator kann in Form von Draht, Blech, Spänen, Pulver oder einer anderen Form vorliegen, die die Ausbildung einer hinreichend großen wirksamen Oberfläche gewährleistet. Insbesodnere die Ausführungsform Draht gestattet die Einbringung des Katalysators in Abwasserströme bei Einhaltung eines sehr geringen Strömungswiderstandes.

Durch eine thermische Behandlung bei Temperaturen von 500 bis 900 °C für eine Zeit von 0,3 bis 3 Stunden in sauerstoffhaltiger Atmosphäre kann ein etwaiger Abfall in der Aktivität des Katalysators kompensiert werden.

Ein nicht mehr regenerierbarer Katalysator wird eingeschmolzen und steht dann erneut als Legierungsmaterial für die Katalysatorherstellung zu Verfügung.

Der erfindungsgenmäße Katalysator bewirkt in Gegenwart von Wasserstoffperoxid die Oxidation schwefelhaltiger Abwasserverunreinigungen, wobei durch den im Abwasser gelösten Sauerstoff eine zusätzliche Unterstützung dieser Oxidation auftritt. Durch Einblasen von Sauerstoff oder Luft kann dieser Effekt noch verstärkt werden.

Die Erfindung wird durch nachfolgende Beispiele näher erläutert. Alle Angaben sind Masse-%.

### Beispiel 1:

20 g einer Legierung, bestehend aus 68 % Kupfer, 30 % Nickel, 1 % Mangan, 0,5 % Eisen, 0,5 % insgesamt an Zink, Schwefel und Phosphor wurden in Drahtform mit einem Durchmesser von 0,3 mm 1 Stunde lang bei 650 °C unter Luftatmosphäre im Muffelofen geglüht. Der so hergestellte Katalysator wurde anschließend bei einer Temperatur von 20 °C in 150 ml eines Abwassers, das insbesondere Sulfitlauge enthielt, gegeben. Der pH-Wert betrug 4. Der CSB* des Abwassers lag bei 910 mg/l, während der TOC** unter 30 mg/l war. In das Abwasser wurden 1,5 ml 35 %iges Wasserstoffperoxid gegeben, woraufhin die Zersetzung der Abwasserverunreinigungen einsetzte. Nach einer Stunde lag der CSB des Abwassers nur noch bei 48 mg/l. Der CSB-Umsatz betrug somit 94,7 %.
*) Chem. Sauerstoffbedarf
**) total organic carbon = gesamter organisch gebundener Kohlenstoff

### Beispiel 2

20 g der Legierung aus Beispiel 1 wurden 1 Stunde lang bei 1200 °C unter Luftatmosphäre geglüht und anschließend fein pulverisiert. Der pulverisierte Katalysator wurde anschließend bei einer Temperatur von 20 °C in 150 ml des gleichen Abwassers wie im Beispiel 1 gegeben, wobei jedoch - im Gegensatz zu Beispiel 1 - gerührt wurde. In das Abwasser wurden 1,5 ml 35 %iges Wasserstoffperoxid gegeben, woraufhin die Zersetzung der Abwasserschadstoffe einsetzte. Nach 30 Minuten betrug der CSB des Abwassers nur noch 42 mg/l. Der CSB-Umsatz lag somit bei 95,4 %.

## Patentansprüche

1. Katalysator zur Oxidation schwefelhaltiger Abwasserverunreinigungen in Gegenwart von Wasserstoffperoxid und Sauerstoff,
**gekennzeichnet** durch eine aus 10 bis 60 Masse-% Nickel, Rest Kupfer bestehende und bei Temperaturen von 500 bis 1200 °C für eine Zeit von 0,3 bis 3 Stunden in sauerstoffhaltiger Atmosphäre thermisch behandelte Legierung.

2. Katalysator nach Anspruch 1,
**dadurch gekennzeichnet**, daß der Katalysator in Form von Draht, Blech, Spänen oder Pulver vorliegt.

3. Katalysator nach Anspruch 1 oder 2,
**dadurch gekennzeichnet**, daß er zusätzlich mindestens eines der Elemente Eisen, Mangan, Zink, Chrom, Phosphor, Schwefel in einer Menge bis insgesamt 5 Masse-% enthält zu Lasten des Kupfergehaltes.

4. Katalysator nach einem der Ansprüche 1 bis 3,
**dadurch gekennzeichnet**, daß er bei einem Abfall in der katalytischen Aktivität durch eine thermische Behandlung im Temperaturbereich von 500 bis 1200 °C für 0,3 bis 3 Stunden regenerierbar ist.
